# EUROPEAN PATENT SPECIFICATION

(11) **EP 4 240 620 B1**
(45) Date of publication and mention of the grant of the patent: **28.08.2024**
(21) Application number: 20803823.2
(22) Date of filing: 09.11.2020
(51) Int. Cl.: B60S 1/34

(54) **DRIVE MECHANISM FOR MOVING A WIPER ARM**
ANTRIEBSMECHANISMUS ZUM BEWEGEN EINES WISCHARMS
MÉCANISME D'ENTRAÎNEMENT POUR DÉPLACER UN BRAS D'ESSUIE-GLACE

(43) Date of publication of application: 13.09.2023
(73) Proprietor: VOLVO TRUCK CORPORATION, 405 08 Göteborg (SE); Commercial Vehicle Group Inc. (CVG), New Albany, Ohio 43054 (US)
(72) Inventor: MOREL, Alain, 01390 CIVRIEUX (FR); GRISON, Yacine, 405 08 GOTEBORG (SE); OLEAS, Jose Mauricio, 405 08 GOTEBORG (SE); KELLY, Joseph, Michigan City, IN 46360 (US); LINDEN, Philip, Valparaiso (US)
(74) Representative: Germain Maureau
(86) International application number: PCT/EP2020/081491
(87) International publication number: WO 2022/096132

(56) References cited:
- DE-B- 1 014 860
- US-A- 4 995 135
- US-A1- 2009 025 173

## Description

### TECHNICAL FIELD

The invention relates to a drive mechanism configured for moving a wiper arm. It also concerns a wiping system for a windshield of a vehicle including said drive mechanism. The invention concerns all sorts of vehicles that use wipers (cars, trucks,...).

### BACKGROUND

A drive mechanism for rotating a wiper arm around a wiper shaft of the vehicle is known in the art. It is also known to longitudinally rotate said wiper arm to maintain an orientation of a rubber blade of the wiper arm with respect to a windshield surface of a vehicle.

Generally, to keep a good wiping quality, an attack angle of a tip of the rubber blade should be close to the normal of the windshield surface, i.e. sensibly perpendicular to the windshield surface at the contact point. This should be the case for all positions of the rubber blade in both wiping directions.

If the attack angles are not respected during operation, the wiper arm and the rubber blade may be susceptible to chatter and become noisy when the rubber blade becomes worn. The wiper arm and the rubber blade have a twisting angle from the heel to the tip that is not balanced. This may contribute to poor wipe quality.

Wiper arms have already been proposed to adapt the attack angle of the rubber blade as for example in EP 1 908 654 A1. The described system is particularly complex and includes devices such as gear and endless screws that are particularly expensive and complex to assemble. Due to its complexity, it appears difficult to have correct durability without failures.

Another example, disclosed in WO 97/20717 A1, concerns a wiping system with an articulated wiper axle. Here, important loads and accelerations during operation increase wear on the cam and on the cam ball insert.

US2009/025173 discloses a wiper having a rotation control mechanism including a primary shaft driven in an alternating axially rotating manner, a drive carrier fixed to the primary shaft, a secondary shaft mounted in an axially rotatable manner in relation to the drive carrier, a fixed cam provided with a specific profiled element, and a control element which is fixed to the secondary shaft and cooperates in a sliding manner with the cam profiled element during the displacement of the drive carrier in relation to the fixed cam, where the sliding of the control element along the cam profiled element control the axial pivoting of the secondary shaft.

There is therefore a need for a reliable and cost effective drive mechanism to adapt the attack angle of the rubber blade. This is especially needed for windshields with an aerodynamic shape and a curved design.

### SUMMARY

For this purpose, the present invention relates to a drive mechanism configured for moving a wiper arm, the drive mechanism comprising:
a support assembly configured to cooperate with a wiper shaft extending according to a primary axis to allow a rotation of the wiper shaft with respect the support assembly according to the primary axis,
a rotating assembly configured to be mounted in a rotationally fixed manner with the wiper shaft, the rotating assembly including at least one cylindrical bearing extending according to a secondary axis, the secondary axis being transverse to the primary axis,
an inclination adjustment assembly including an inclination shaft configured to be fixed to the wiper arm and to cooperate with the at least one cylindrical bearing so as to be allowed to rotate according to the secondary axis, the inclination adjustment assembly further including a radial pin mounted on the inclination shaft and configured to cooperate with a biasing element of the support assembly, the biasing element being configured to rotate the inclination shaft depending on a displacement of the rotating assembly according to the primary axis with respect to the support assembly.

This arrangement allows modifying the orientation of a rubber blade included in the wiper arm based on the position of the wiper arm in relation to the windshield surface curved shape. This is particularly advantageous when the windshield curvature is particularly important.

This contributes to a good wiping quality and it reduces potential noises and blade chatter.

The drive mechanism can be used on the passenger side and on the driver side of a vehicle with all curved windshield definitions provided that the biasing element is adapted to said curvature.

Moving the radial pin with the biasing element constitutes a simple and reliable mechanism, as the constraints on the radial pin are low. Indeed, the inclination adjustment assembly rotates together with the rotating assembly and the displacements of the inclination shaft with respect to the rotating assembly are limited.

According to an unclaimed aspect of the invention, the radial pin is extending according to a pin axis extending transversally to the secondary axis. Preferably, the inclination adjustment assembly comprises a cylindrical mounting element configured to be attached around the inclination shaft and that includes a fastening location for the radial pin.

According to an aspect of the invention, the radial pin comprises a spherical segment configured to cooperate with the biasing element.

As the radial pin rotates according to the secondary axis, this provision enables to define an optimal contact between the biasing element and the radial pin in every angular position. According to an aspect of the invention, said spherical segment is comprised in a cam roller of the radial pin.

This provision reduces wear. The drive mechanism is thus durable.

According to an unclaimed aspect of the invention, the pin axis corresponds to a revolution axis of the spherical segment. According to an aspect of the invention, the radial pin comprises a central part configured to be attached to the fastening location.

According to an aspect of the invention, the biasing element is a cam plate extending transversally to the primary axis and presenting an aperture configured to receive the radial pin.

According to an aspect of the invention, the aperture corresponds to a through opening in the cam plate. The drive mechanism comprises simple components, which implies that it is cost effective and reliable.

According to an aspect of the invention, the aperture presents a closed contour located partially around the primary axis to allow a displacement of the radial pin between two end positions of the rotating assembly around the primary axis.

According to an aspect of the invention, the aperture presents a cooperating surface designed for cooperating with the radial pin, said cooperating surface extending parallel to the primary axis.

According to the invention, the support assembly comprises a cylindrical intermediate part on which the biasing element is attached, the cylindrical intermediate part being configured to be mounted on a guiding support of the wiper shaft in a fixed manner.

According to an unclaimed aspect of the invention, the cylindrical intermediate part comprises a bearing element for cooperating with the wiper shaft. According to an aspect of the invention, the guiding support is configured to be attached to a vehicle and serves as a bearing portion for the wiper shaft.

According to the invention, the cylindrical intermediate part comprises radial retaining walls configured to cooperate with complementary radial retaining walls of the biasing element to prevent a rotation according to the primary axis.

According to an unclaimed aspect of the invention, the radial retaining walls are located on a lug or a notch of the cylindrical intermediate part extending radially and the complementary radial retaining walls are located in a complementary notch or respectively complementary lug of the biasing element.

According to an unclaimed aspect of the invention, the cylindrical intermediate part comprises radial blocking walls configured to cooperate with complementary blocking walls of the guiding support to prevent a rotation according to the primary axis.

According to an aspect of the invention, the rotating assembly comprises a protective casing wherein the biasing element and the radial pin are located, the protective casing presenting a cylindrical opening for accommodating the inclination shaft, the at least one cylindrical bearing being located inside said cylindrical opening.

According to an unclaimed aspect of the invention, the protective casing comprises two parts configured to be secured together.

According to an aspect of the invention, the rotating assembly comprises a gripping part configured to fix in rotation the rotating assembly to the wiper shaft.

According to an unclaimed aspect of the invention, the gripping part is included in or configured to cooperate with the protective casing.

The present invention also concerns a wiping system comprising a drive mechanism as detailed above and a wiper arm including a holder and a rubber blade attached to said holder, the biasing element being configured to adapt an orientation of the rubber blade with regard to a windshield surface of a vehicle on which the wiping system is mounted.

In other words, the inclination shaft is configured for moving the holder around the secondary axis following the actuation of the biasing element.

According to an aspect of the invention, the biasing element is geometrically designed with respect to a curvature of the windshield surface so that an attack angle of the rubber blade remains under a predefined value with regard to the normal at a contact point across a contact length of the rubber blade with the windshield surface.

According to an aspect of the invention, the attack angle is defined, for each section of the rubber blade as the attack angle between the normal at the contact point of a tip of the rubber blade and a central axis of the corresponding section of the rubber blade defined between the tip and a center of the heel of the rubber blade.

The attack angle should be considered according to both directions, i.e. as positive and negative with respect to the normal. According to an aspect of the invention, said predefined value is inferior to 20°, preferably inferior to 15° and in particular inferior to 10°. In other words, it corresponds to 40°, 30° and 20° angle intervals around the normal.

According to an aspect of the invention, the holder comprises a coupling part configured to be mounted fixed in rotation on the inclination shaft, an arm front designed to attach the rubber blade and a retainer linking the coupling part and the arm front.

According to an unclaimed aspect of the invention, the coupling part includes a cooperating annular element configured to cooperate with the protective casing according to a rotation around the inclination shaft.

According to an aspect of the invention, the holder comprises an articulation device configured to enable a rotation of the retainer with respect to the coupling part according to an unfolding axis extending transversally to the secondary axis.

According to an aspect of the invention, the articulation device comprises a binding element configured to cooperate with a retaining spring of the holder, the retaining spring being configured to be attached to the arm front and to apply a constraint to rotate the retainer in direction of the windshield surface around the unfolding axis.

According to an aspect of the invention, the binding element comprises a hook configured to attach a corresponding part of the retaining spring. Preferably, the binding element is configured to cooperate with a support pin of the coupling part extending parallel to the unfolding axis.

The present invention also concerns a wiping system as disclosed above.

The different aspects defined above that are not incompatible can be combined. Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig.1 is a perspective view of a vehicle comprising two wiping assemblies.
Fig. 2 is a perspective view of a wiping system,
Fig. 3 is an exploded of a drive mechanism of the wiping system,
Fig.4 is a side sectional view of the drive mechanism,
Fig.5 is an exploded view showing a part of the drive mechanism and a coupling part of a wiper arm of the wiping system,
Fig.6 is an exploded view of a support assembly of the drive mechanism,
Fig.7 is a perspective sectional view of the drive mechanism,
Fig. 8 is another perspective sectional view of the drive mechanism,
Fig.9 is a sectional view of a rubber blade of the wiper arm,
Fig. 10 is an exploded view of the coupling part of the wiper arm.
Fig.11 is a rear perspective view of the wiping system,

### DETAILED DESCRIPTION OF EXAMPLE EMBODIMENTS OF THE INVENTION

In the following detailed description of the figures defined above, the same elements or the elements that are fulfilling identical functions may retain the same references so as to simplify the understanding of the invention.

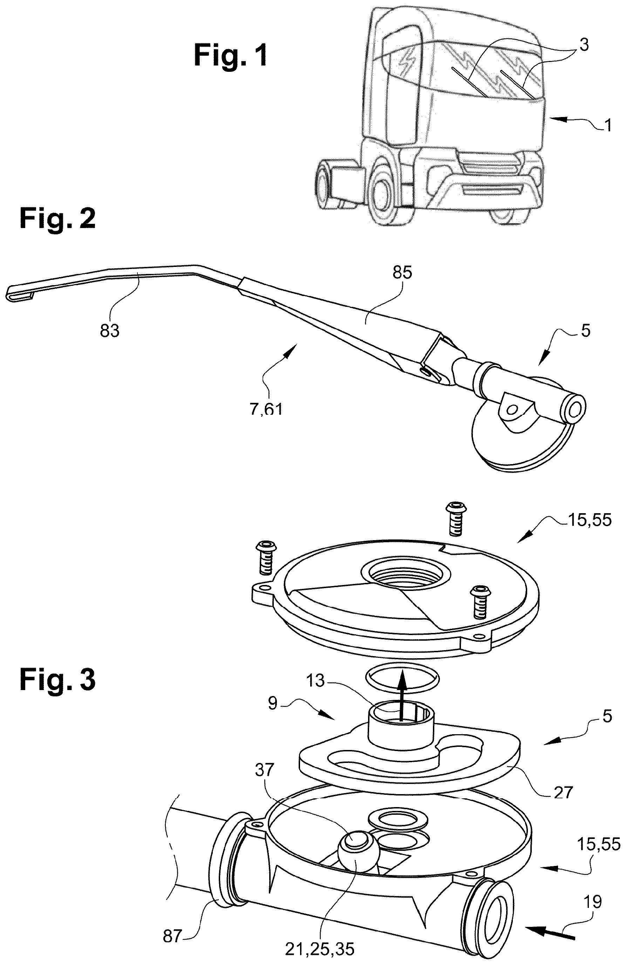

As illustrated in figure 1, a vehicle 1 comprises two wiping systems 3. Each wiping system 3 comprises a drive mechanism 5 as illustrated in figures 2 to 8.

The drive mechanism 5 is configured for moving a wiper arm 7 of the wiping system 3, the drive mechanism 5 comprising a support assembly 9 configured to cooperate with a wiper shaft 11 of the vehicle 1 extending according to a primary axis 13 to allow a reciprocating rotation of the wiper shaft 11 with respect the support assembly 9 along the primary axis 13.

The drive mechanism 5 comprises a rotating assembly 15 configured to be mounted in a rotationally fixed manner with the wiper shaft 11, the rotating assembly 15 including at least one cylindrical bearing 17 extending according to a secondary axis 19, the secondary axis 19 being transverse to the primary axis 13.

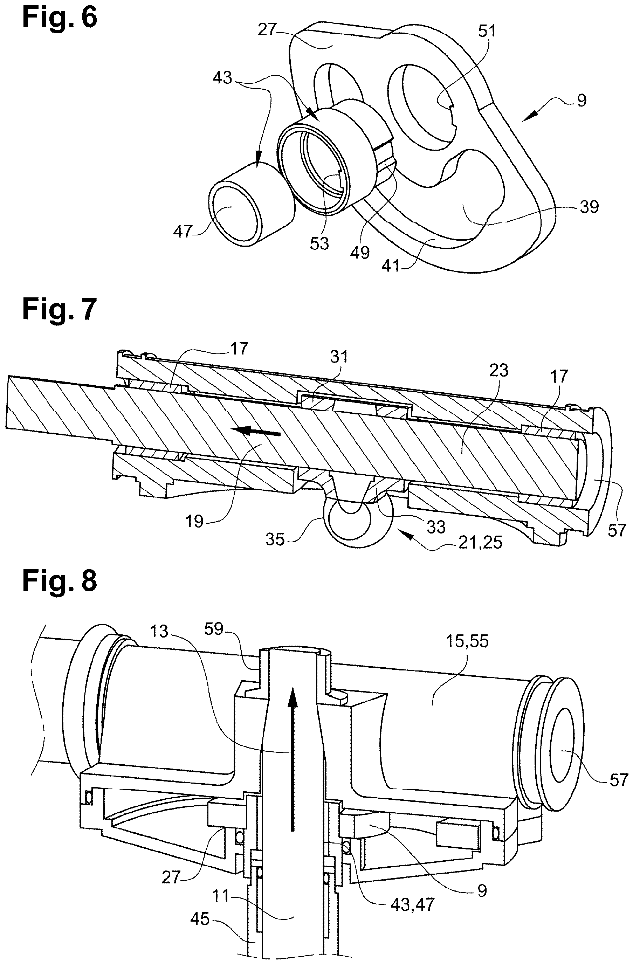

The drive mechanism 5 also comprises an inclination adjustment assembly 21, as illustrated in figure 7, including an inclination shaft 23 configured to be fixed to the wiper arm 7 and to cooperate with the at least one cylindrical bearing 17 so as to be allowed to rotate according to the secondary axis 19.

The inclination adjustment assembly 21 further includes a radial pin 25 mounted on the inclination shaft 23 and configured to cooperate with a biasing element 27 of the support assembly 9, the biasing element 27 being configured to rotate the inclination shaft 23 depending on a displacement of the rotating assembly 15 according to the primary axis 13 with respect to the support assembly 9.

The radial pin 25 is extending according to a pin axis 29 extending transversally to the secondary axis 19. The inclination adjustment assembly 21 comprises a cylindrical mounting element 31 configured to be attached around the inclination shaft 23 and that includes a fastening location 33 for the radial pin 25.

The radial pin 25 comprises a spherical segment 35 configured to cooperate with the biasing element 27. Said spherical segment 35 is comprised in a cam roller of the radial pin 25.

The pin axis 29 corresponds to a revolution axis of the spherical segment 35. The radial pin 25 comprises a central part 37 configured to be attached to the fastening location 33.

As particularly visible on figure 6, the biasing element 27 is a cam plate extending transversally to the primary axis 13 and presenting an aperture 39 configured to receive the radial pin 25. The aperture 39 corresponds to a through opening in the cam plate.

The aperture 39 presents a closed contour located partially around the primary axis 13 to allow a displacement of the radial pin 25 between two end positions of the rotating assembly 15 around the primary axis 13.

The aperture 39 presents a cooperating surface 41 designed for cooperating with the radial pin 25, said cooperating surface 41 extending parallel to the primary axis 13. In other word, the pin 25 follows the entire cooperating surface 41 during a movement of the wiper from a start to end and back to start position and the spherical segment 35 rolls on the edge of the aperture 39.

The support assembly 9 comprises a cylindrical intermediate part 43 on which the biasing element 27 is attached, the cylindrical intermediate part 43 being configured to be mounted on a guiding support 45 of the wiper shaft 11 in a fixed manner.

The cylindrical intermediate part 43 comprises a bearing element 47 for cooperating with the wiper shaft 11. The guiding support 45 is comprised in the vehicle 1 and serves as a bearing portion for the wiper shaft 11.

The cylindrical intermediate part 43 comprises radial retaining walls 49 configured to cooperate with complementary radial retaining walls 51 of the biasing element 27 to prevent a rotation according to the primary axis 13.

The radial retaining walls 49 are located on a lug or a notch of the cylindrical intermediate part 43 extending radially and the complementary radial retaining walls 51 are located in a complementary notch or respectively complementary lug of the biasing element 27.

The cylindrical intermediate part 43 comprises radial blocking walls 53 configured to cooperate with complementary blocking walls of the guiding support 45 to prevent a rotation according to the primary axis 13.

The rotating assembly 15 comprises a protective casing 55 wherein the biasing element 27 and the radial pin 25 are located, the protective casing 55 presenting a cylindrical opening 57 for accommodating the inclination shaft 23, the at least one cylindrical bearing 17 being located inside said cylindrical opening 57.

The protective casing 55 comprises two parts configured to be secured together.

The rotating assembly 15 comprises a gripping part 59 configured to fix in rotation the rotating assembly 15 to the wiper shaft 11. The gripping part 59 is included in or configured to cooperate with the protective casing 55.

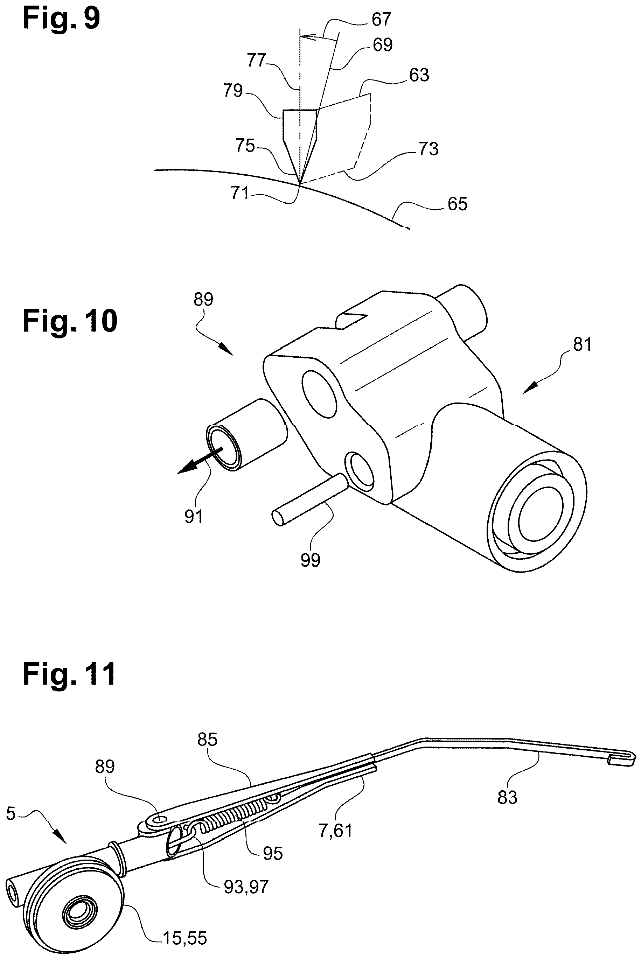

As illustrated in figures 2 and 11, the wiping system 3 comprises a drive mechanism 5 as detailed above and the wiper arm 7.

The wiper arm 7 includes a holder 61 and a rubber blade 63 attached to said holder 61 and schematically represented in figure 9, the biasing element 27 being configured to adapt an orientation of the rubber blade 63 with regard to a windshield surface 65 of a vehicle 1 on which the wiping system 3 is mounted.

In other words, the inclination shaft 23 is configured for moving the holder 61 around the secondary axis 19 following the actuation of the biasing element 27.

The biasing element 27 is geometrically designed with respect to a curvature of the windshield surface 65 so that an attack angle 67 of the rubber blade 63 remains under a predefined value with regard to the normal 69 at a contact point 71 across a contact length 73 of the rubber blade 63 with the windshield surface 65.

As illustrated in figure 9, the attack angle 67 is defined, for each section of the rubber blade 63 as the attack angle 67 between the normal 69 at the contact point 71 of a tip 75 of the rubber blade 63 and a central axis 77 of the corresponding section of the rubber blade 63 defined between the tip 75 and a center of the heel 79 of the rubber blade 63.

The attack angle 67 should be considered according to both directions, i.e. as positive and negative with respect to the normal 69. Said predefined value is inferior to 20°, preferably inferior to 15° and in particular inferior to 10°. In other words, it corresponds to 40°, 30° and 20° angle intervals around the normal 69.

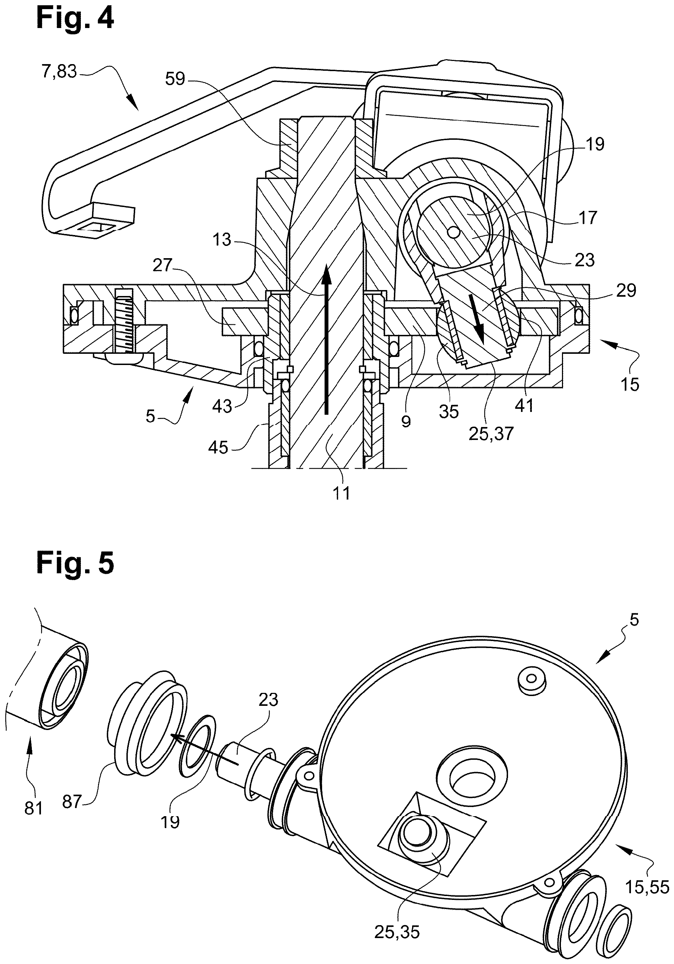

As illustrated in figures 5,10 and 11, the holder 61 comprises a coupling part 81 configured to be mounted fixed in rotation on the inclination shaft 23, an arm front 83 designed to attach the rubber blade 63 and a retainer 85 linking the coupling part 81 and the arm front 83.

The coupling part 81 includes a cooperating annular element 87 configured to cooperate with the protective casing 55 according to a rotation around the inclination shaft 23.

The holder 61 comprises an articulation device 89 configured to enable a rotation of the retainer 85 with respect to the coupling part 81 according to an unfolding axis 91 extending transversally to the secondary axis 19.

The articulation device 89 comprises a binding element 93 configured to cooperate with a retaining spring 95 of the holder 61, the retaining spring 95 being configured to be attached to the arm front 83 and to apply a constraint to rotate the retainer 85 in direction of the windshield surface 65 around the unfolding axis 91.

The binding element 93 comprises a hook 97 configured to attach a corresponding part of the retaining spring 95. Preferably, the binding element 93 is configured to cooperate with a support pin 99 of the coupling part 81 extending parallel to the unfolding axis 91.

These arrangements allow modifying the orientation of a rubber blade 63 included in the wiper arm 7 based on the position of the wiper arm 7 in relation to the windshield surface 65 curved shape. This is particularly advantageous when the windshield curvature is particularly important.

This contributes to a good wiping quality and it reduces potential noises and blade chatter. The drive mechanism 5 can be used on the passenger side and on the driver side of a vehicle 1 with all curved windshield definitions provided that the biasing element 27 is adapted to said curvature.

Moving the radial pin 25 with the biasing element 27 constitutes a simple and reliable mechanism, as the constraints on the radial pin 27 are low. Indeed, the inclination adjustment assembly 21 rotates together with the rotating assembly 15 and the displacements of the inclination shaft 23 with respect to the rotating assembly 15 are limited.

As the radial pin 25 rotates according to the secondary axis 19, it defines an optimal contact between the biasing element 27 and the radial pin 25 in every angular position. Wear is reduced. The drive mechanism 5 is thus durable.

The drive mechanism 5 comprises simple components, which implies that it is cost effective and reliable.

## Claims

1. Drive mechanism (5) configured for moving a wiper arm (7), the drive mechanism (5) comprising:
- a support assembly (9) configured to cooperate with a wiper shaft (11) extending according to a primary axis (13) to allow a rotation of the wiper shaft (11) with respect the support assembly (9) according to the primary axis (13),
- a rotating assembly (15) configured to be mounted in a rotationally fixed manner with the wiper shaft (11), the rotating assembly (15) including at least one cylindrical bearing (17) extending according to a secondary axis (19), the secondary axis (19) being transverse to the primary axis (13),
- an inclination adjustment assembly (21) including an inclination shaft (23) configured to be fixed to the wiper arm (7) and to cooperate with the at least one cylindrical bearing (17) so as to be allowed to rotate according to the secondary axis (19), the inclination adjustment assembly (21) further including a radial pin (25) mounted on the inclination shaft (23) and configured to cooperate with a biasing element (27) of the support assembly (9), the biasing element (27) being configured to rotate the inclination shaft (23) depending on a displacement of the rotating assembly (15) according to the primary axis (13) with respect to the support assembly (9),
**characterised in that**
the support assembly (9) comprises a cylindrical intermediate part (43) on which the biasing element (27) is attached, the cylindrical intermediate part (43) being configured to be mounted on a guiding support (45) of the wiper shaft (11) in a fixed manner,
wherein the cylindrical intermediate part (43) comprises radial retaining walls (49) configured to cooperate with complementary radial retaining walls (51) of the biasing element (27) to prevent a rotation according to the primary axis (13).

2. Drive mechanism (5) according to claim 1, wherein the radial pin (25) comprises a spherical segment (35) configured to cooperate with the biasing element (27).

3. Drive mechanism (5) according to claim 2, wherein said spherical segment (35) is comprised in a cam roller of the radial pin (25).

4. Drive mechanism (5) according to one of the claims 1 to 3, wherein the biasing element (27) is a cam plate extending transversally to the primary axis (13) and presenting an aperture (39) configured to receive the radial pin (25).

5. Drive mechanism (5) according to claim 4, wherein the aperture (39) presents a closed contour located partially around the primary axis (13) to allow a displacement of the radial pin (25) between two end positions of the rotating assembly (15) around the primary axis (13).

6. Drive mechanism (5) according to one of the claims 1 to 5, wherein the rotating assembly (15) comprises a protective casing (55) wherein the biasing element (27) and the radial pin (25) are located, the protective casing (55) presenting a cylindrical opening (57) for accommodating the inclination shaft (23), the at least one cylindrical bearing (17) being located inside said cylindrical opening (57).

7. Drive mechanism (5) according to one of the claims 1 to 6, wherein the rotating assembly (15) comprises a gripping part (59) configured to fix in rotation the rotating assembly (15) to the wiper shaft (11).

8. Wiping system (3) comprising a drive mechanism (5) according to one of the claims 1 to 7 and a wiper arm (7) including a holder (61) and a rubber blade (63) attached to said holder (61), the biasing element (27) being configured to adapt an orientation of the rubber blade (63) with regard to a windshield surface (65) of a vehicle (1) on which the wiping system (3) is mounted.

9. Wiping system (3) according to claim 8, wherein the biasing element (27) is geometrically designed with respect to a curvature of the windshield surface (65) so that an attack angle (67) of the rubber blade (63) remains under a predefined value with regard to the normal (69) at a contact point (71) across a contact length (73) of the rubber blade (63) with the windshield surface (65).

10. Wiping system (3) according to one of the claims 8 or 9, wherein the holder (61) comprises a coupling part (81) configured to be mounted fixed in rotation on the inclination shaft (23), an arm front (83) designed to attach the rubber blade (63) and a retainer (85) linking the coupling part (81) and the arm front (83).

11. Wiping system (3) according to claim 10, wherein the holder (61) comprises an articulation device (89) configured to enable a rotation of the retainer (85) with respect to the coupling part (81) according to an unfolding axis (91) extending transversally to the secondary axis (19).

12. Wiping system (3) according to claim 11, wherein the articulation device (89) comprises a binding element (93) configured to cooperate with a retaining spring (95) of the holder (61), the retaining spring (95) being configured to be attached to the arm front (83) and to apply a constraint to rotate the retainer (85) in direction of the windshield surface (65) around the unfolding axis (91).

## Patentansprüche

1. Antriebsmechanismus (5), der zum Bewegen eines Wischerarms (7) konfiguriert ist, wobei der Antriebsmechanismus (5) umfasst:
- eine Trägerbaugruppe (9), die so konfiguriert ist, dass sie mit einer Wischerwelle (11) zusammenwirkt, die sich gemäß einer Primärachse (13) erstreckt, um eine Drehung der Wischerwelle (11) in Bezug auf die Trägerbaugruppe (9) gemäß der Primärachse (13) zu ermöglichen,
- eine Drehbaugruppe (15), die so konfiguriert ist, dass sie drehfest mit der Wischerwelle (11) montiert werden kann, wobei die Drehbaugruppe (15) mindestens ein zylindrisches Lager (17) beinhaltet, das sich gemäß einer Sekundärachse (19) erstreckt, wobei die Sekundärachse (19) quer zur Primärachse (13) verläuft,
- eine Neigungseinstellbaugruppe (21), die eine Neigungswelle (23) beinhaltet, die so konfiguriert ist, dass sie am Wischerarm (7) befestigt werden und mit dem mindestens einen zylindrischen Lager (17) so zusammenwirken kann, dass es ihr möglich ist, gemäß der Sekundärachse (19) zu drehen, wobei die Neigungseinstellbaugruppe (21) weiter einen radialen Stift (25) beinhaltet, der an der Neigungswelle (23) montiert und so konfiguriert ist, dass er mit einem Vorspannelement (27) der Trägerbaugruppe (9) zusammenwirkt, wobei das Vorspannelement (27) so konfiguriert ist, dass es die Neigungswelle (23) abhängig von einer Verlagerung der Drehbaugruppe (15) gemäß der Primärachse (13) in Bezug auf die Trägerbaugruppe (9) dreht,
**dadurch gekennzeichnet, dass**
die Trägerbaugruppe (9) ein zylindrisches Zwischenteil (43) umfasst, an dem das Vorspannelement (27) angebracht ist, wobei das zylindrische Zwischenteil (43) so konfiguriert ist, dass es fest an einem Führungsträger (45) der Wischerwelle (11) montiert werden kann,
wobei das zylindrische Zwischenteil (43) radiale Rückhaltewände (49) umfasst, die so konfiguriert sind, dass sie mit komplementären radialen Rückhaltewänden (51) des Vorspannelements (27) zusammenwirken, um eine Drehung gemäß der Primärachse (13) zu verhindern.

2. Antriebsmechanismus (5) nach Anspruch 1, wobei der radiale Stift (25) ein Kugelsegment (35) umfasst, das so konfiguriert ist, dass es mit dem Vorspannelement (27) zusammenwirkt.

3. Antriebsmechanismus (5) nach Anspruch 2, wobei das Kugelsegment (35) in einer Nockenwalze des radialen Stifts (25) umfasst ist.

4. Antriebsmechanismus (5) nach einem der Ansprüche 1 bis 3, wobei das Vorspannelement (27) eine Nockenplatte ist, die sich quer zur Primärachse (13) erstreckt und einen Durchbruch (39) aufweist, der so konfiguriert ist, dass er den radialen Stift (25) aufnimmt.

5. Antriebsmechanismus (5) nach Anspruch 4, wobei der Durchbruch (39) eine geschlossene Kontur aufweist, die sich teilweise um die Primärachse (13) herum befindet, um eine Verlagerung des radialen Stifts (25) zwischen zwei Endpositionen der Drehbaugruppe (15) um die Primärachse (13) herum zu ermöglichen.

6. Antriebsmechanismus (5) nach einem der Ansprüche 1 bis 5, wobei die Drehbaugruppe (15) ein Schutzgehäuse (55) umfasst, in dem sich das Vorspannelement (27) und der radiale Stift (25) befinden, wobei das Schutzgehäuse (55) eine zylindrische Öffnung (57) zum Aufnehmen der Neigungswelle (23) aufweist, wobei sich das mindestens eine zylindrische Lager (17) innerhalb der zylindrischen Öffnung (57) befindet.

7. Antriebsmechanismus (5) nach einem der Ansprüche 1 bis 6, wobei die Drehbaugruppe (15) ein Greifteil (59) umfasst, das so konfiguriert ist, dass es die Drehbaugruppe (15) drehfest an der Wischerwelle (11) befestigt.

8. Wischsystem (3), das einen Antriebsmechanismus (5) nach einem der Ansprüche 1 bis 7 und einen Wischerarm (7) umfasst, der einen Halter (61) und ein an dem Halter (61) angebrachtes Gummiblatt (63) beinhaltet, wobei das Vorspannelement (27) so konfiguriert ist, dass es eine Ausrichtung des Gummiblatts (63) in Bezug auf eine Windschutzscheibenoberfläche (65) eines Fahrzeugs (1), an dem das Wischsystem (3) montiert ist, anpasst.

9. Wischsystem (3) nach Anspruch 8, wobei das Vorspannelement (27) in Bezug auf eine Krümmung der Windschutzscheibenoberfläche (65) geometrisch so gestaltet ist, dass ein Anstellwinkel (67) des Gummiblatts (63) in Bezug auf die Normale (69) an einem Kontaktpunkt (71) über eine Kontaktlänge (73) des Gummiblatts (63) mit der Windschutzscheibenoberfläche (65) hinweg unter einem vordefinierten Wert bleibt.

10. Wischsystem (3) nach einem der Ansprüche 8 oder 9, wobei der Halter (61) ein Kopplungsteil (81), das so konfiguriert ist, dass es drehfest an der Neigungswelle (23) montiert werden kann, eine Armvorderseite (83), die so gestaltet ist, dass sie das Gummiblatt (63) anbringt, und eine Rückhalterung (85) umfasst, die das Kopplungsteil (81) und die Armvorderseite (83) miteinander verbindet.

11. Wischsystem (3) nach Anspruch 10, wobei der Halter (61) eine Gelenkvorrichtung (89) umfasst, die so konfiguriert ist, dass sie eine Drehung der Rückhalterung (85) in Bezug auf das Kopplungsteil (81) gemäß einer Entfaltungsachse (91), die sich quer zur Sekundärachse (19) erstreckt, ermöglicht.

12. Wischsystem (3) nach Anspruch 11, wobei die Gelenkvorrichtung (89) ein Bindeelement (93) umfasst, das so konfiguriert ist, dass es mit einer Rückhaltefeder (95) des Halters (61) zusammenwirkt, wobei die Rückhaltefeder (95) so konfiguriert ist, dass sie an der Armvorderseite (83) angebracht werden und eine Kraft anlegen kann, um die Rückhalterung (85) in Richtung der Windschutzscheibenoberfläche (65) um die Entfaltungsachse (91) herum zu drehen.

## Revendications

1. Mécanisme d'entraînement (5) configuré pour déplacer un bras d'essuie-glace (7), le mécanisme d'entraînement (5) comprenant :
- un ensemble de support (9) configuré pour coopérer avec un arbre d'essuie-glace (11) s'étendant selon un axe primaire (13) pour permettre une rotation de l'arbre d'essuie-glace (11) par rapport à l'ensemble de support (9) selon l'axe primaire (13),
- un ensemble de rotation (15) configuré pour être monté de manière fixe en rotation avec l'arbre d'essuie-glace (11), l'ensemble de rotation (15) comprenant au moins un roulement cylindrique (17) s'étendant selon un axe secondaire (19), l'axe secondaire (19) étant transversal à l'axe primaire (13),
- un ensemble de réglage d'inclinaison (21) comprenant un arbre d'inclinaison (23) configuré pour être fixé au bras d'essuie-glace (7) et pour coopérer avec l'au moins un roulement cylindrique (17) de manière à pouvoir tourner selon l'axe secondaire (19), l'ensemble de réglage d'inclinaison (21) comprenant en outre une broche radiale (25) montée sur l'arbre d'inclinaison (23) et configurée pour coopérer avec un élément de sollicitation (27) de l'ensemble de support (9), l'élément de sollicitation (27) étant configuré pour faire tourner l'arbre d'inclinaison (23) en fonction d'un déplacement de l'ensemble de rotation (15) selon l'axe primaire (13) par rapport à l'ensemble de support (9),
**caractérisé en ce que**
l'ensemble de support (9) comprend une partie intermédiaire cylindrique (43) sur laquelle est fixé l'élément de sollicitation (27), la partie intermédiaire cylindrique (43) étant configurée pour être montée sur un support de guidage (45) de l'arbre d'essuie-glace (11) de manière fixe,
dans lequel la partie intermédiaire cylindrique (43) comprend des parois de retenue radiales (49) configurées pour coopérer avec des parois de retenue radiales complémentaires (51) de l'élément de sollicitation (27) pour empêcher une rotation selon l'axe primaire (13).

2. Mécanisme d'entraînement (5) selon la revendication 1, dans lequel la broche radiale (25) comprend un segment sphérique (35) configuré pour coopérer avec l'élément de sollicitation (27).

3. Mécanisme d'entraînement (5) selon la revendication 2, dans lequel ledit segment sphérique (35) est compris dans un galet de came de la broche radiale (25).

4. Mécanisme d'entraînement (5) selon l'une des revendications 1 à 3, dans lequel l'élément de sollicitation (27) est un disque à cames s'étendant transversalement à l'axe primaire (13) et présentant un orifice (39) configuré pour recevoir la broche radiale (25).

5. Mécanisme d'entraînement (5) selon la revendication 4, dans lequel l'orifice (39) présente un contour fermé situé partiellement autour de l'axe primaire (13) pour permettre un déplacement de la broche radiale (25) entre deux positions d'extrémité de l'ensemble de rotation (15) autour de l'axe primaire (13).

6. Mécanisme d'entraînement (5) selon l'une des revendications 1 à 5, dans lequel l'ensemble de rotation (15) comprend un carter de protection (55) dans lequel l'élément de sollicitation (27) et la broche radiale (25) sont situés, le carter de protection (55) présentant une ouverture cylindrique (57) pour recevoir l'arbre d'inclinaison (23), l'au moins un roulement cylindrique (17) étant situé à l'intérieur de ladite ouverture cylindrique (57).

7. Mécanisme d'entraînement (5) selon l'une des revendications 1 à 6, dans lequel l'ensemble de rotation (15) comprend une partie de préhension (59) configurée pour fixer en rotation l'ensemble de rotation (15) à l'arbre d'essuieglace (11).

8. Système d'essuyage (3) comprenant un mécanisme d'entraînement (5) selon l'une des revendications 1 à 7 et un bras d'essuie-glace (7) comprenant un dispositif de maintien (61) et une lame en caoutchouc (63) fixée audit dispositif de maintien (61), l'élément de sollicitation (27) étant configuré pour adapter une orientation de la lame en caoutchouc (63) par rapport à une surface de pare-brise (65) d'un véhicule (1) sur lequel le système d'essuyage (3) est monté.

9. Système d'essuyage (3) selon la revendication 8, dans lequel l'élément de sollicitation (27) est conçu géométriquement par rapport à une courbure de la surface de pare-brise (65) de sorte qu'un angle d'attaque (67) de la lame en caoutchouc (63) reste sous une valeur prédéfinie par rapport à la normale (69) à un point de contact (71) sur une longueur de contact (73) de la lame en caoutchouc (63) avec la surface de pare-brise (65).

10. Système d'essuyage (3) selon l'une des revendications 8 et 9, dans lequel le dispositif de maintien (61) comprend une partie d'accouplement (81) configurée pour être montée de manière fixe en rotation sur l'arbre d'inclinaison (23), une partie avant de bras (83) conçue pour fixer la lame en caoutchouc (63) et un dispositif de retenue (85) reliant la partie d'accouplement (81) et la partie avant de bras (83).

11. Système d'essuyage (3) selon la revendication 10, dans lequel le dispositif de maintien (61) comprend un dispositif d'articulation (89) configuré pour permettre une rotation du dispositif de retenue (85) par rapport à la partie d'accouplement (81) selon un axe de déploiement (91) s'étendant transversalement à l'axe secondaire (19).

12. Système d'essuyage (3) selon la revendication 11, dans lequel le dispositif d'articulation (89) comprend un élément de liaison (93) configuré pour coopérer avec un ressort de retenue (95) du dispositif de maintien (61), le ressort de retenue (95) étant configuré pour être fixé à la partie avant de bras (83) et pour appliquer une contrainte pour faire tourner le dispositif de retenue (85) dans la direction de la surface de pare-brise (65) autour de l'axe de déploiement (91).
